**Europäisches Patentamt**

**European Patent Office**

**Office européen des brevets**

(19)

(11) Numéro de publication : **0 500 463 A1**

## (12) DEMANDE DE BREVET EUROPEEN

(21) Numéro de dépôt : **92400442.7**

(22) Date de dépôt : **19.02.92**

(51) Int. Cl.⁵ : **H04N 7/14**

(30) Priorité : **19.02.91 FR 9101952**

(43) Date de publication de la demande :
**26.08.92 Bulletin 92/35**

(84) Etats contractants désignés :
**AT BE CH DE GB LI NL**

(71) Demandeur : **MATRA COMMUNICATION**
**50, rue du Président Sadate**
**F-29101 Quimper (FR)**

(72) Inventeur : **Hascoet, Joseph**
**68, route de Ste Gesme**
**F-78860 Saint Nom la Breteche (FR)**

(74) Mandataire : **Fort, Jacques**
**CABINET PLASSERAUD 84, rue d'Amsterdam**
**F-75009 Paris (FR)**

(54) **Terminal visiophonique.**

(57) Un terminal visiophonique comprend un moniteur de télévision (40) destiné à fournir l'image du correspondant, une caméra de télévision orientée pour fournir un signal vidéo de représentation en gros plan du locuteur utilisant le terminal, et un codeur-décodeur de mise du signal vidéo sous forme d'un train binaire sortant et de transformation d'un train binaire entrant en un signal d'utilisation par le moniteur, la partie codeur ayant un codeur de source comprenant des moyens de prédiction temporelle inter-image et de transformation en cosinus discrète de chacun de blocs rectangulaires de pixels, de même taille, constituant l'image. Un codeur-décodeur comprend également des moyens d'estimation de l'activité temporelle individuelle des blocs d'image, par comparaison entre blocs correspondants de deux images successives, et des moyens pour déterminer les blocs d'activité temporelle maximale et comparer leur position avec une position de référence prédéterminée et des moyens pour fournir, sur le moniteur, une indication du sens du déplacement éventuel requis du locuteur pour qu'il soit cadré par rapport à la caméra.

FIG.1.

disp. de cde

DRAM

L'invention concerne les installations de visiophonie, c'est-à-dire celles dans lesquelles il est possible à un locuteur muni d'un terminal d'échanger des informations vocales et visuelles avec un correspondant muni d'un terminal similaire. L'invention concerne particulièrement les terminaux visiophoniques destinés à communiquer par l'intermédiaire du réseau commuté, à bande passante relativement étroite.

L'invention présente un intérêt tout particulier dans un terminal du type répondant à la recommandation H 261 du CCITT, à laquelle on pourra se reporter. Un tel terminal comprend un moniteur de télévision destiné à fournir l'image du correspondant, une caméra de télévision orientée pour fournir un signal vidéo de représentation en gros plan du locuteur utilisant le terminal, et un codeur-décodeur de mise du signal vidéo sous forme d'un train binaire sortant et de transformation d'un train binaire entrant en un signal d'utilisation par le moniteur, la partie codeur ayant un codeur de source comprenant des moyens de prédiction temporelle inter-image et de transformation en cosinus discrète ou "TCD" de chacun des blocs rectangulaires de pixels, de même taille, constituant l'image.

Pour être compatible avec la bande passante de transmission, l'image visiophonique a une faible résolution, ce qui oblige à un cadrage en gros plan. Les mouvements du locuteur peuvent l'amener à sortir du champ de la caméra. Il est souhaitable de munir le terminal de moyens l'aidant à rester dans le champ.

On a déjà réaliser dans ce but des terminaux du type ci-dessus dans lesquels l'écran du moniteur est placé au fond d'un tunnel orienté de façon telle que le locuteur soit dans le champ de la caméra lorsqu'il voit complètement l'écran. Cette solution a, entre autres inconvénients, celui d'augmenter notablement l'encombrement du terminal. Elle est par exemple représentée dans NTZ - NACHRICHTENTECHNIS-CHE ZEITSCHRIFT, vol. 42, no. 3, mars 1989, pages 150, 152-154; R. HEISS : "Bildtelefon und Videokonferenz-Endgeräte".

D'autres possibilités viennent immédiatement à l'esprit. Par exemple on peut incruster en médaillon, dans l'image du correspondant fournie par le moniteur, une représentation de l'image transmise vers le correspondant. Cette solution complique notablement le terminal et diminue la surface de représentation disponible.

La présente invention vise à fournir un terminal visiophonique du type ci-dessus défini fournissant au locuteur une information l'aidant à se recentrer par rapport à la caméra lorsqu'il tente à sortir du champ, et ce de façon simple, sans complication notable des circuits du terminal.

Pour cela l'invention part de la constatation que, dans la scène vue par la caméra, l'activité temporelle des blocs de pixels représentant le visage du locuteur est très supérieure à celle du fond : la tête n'est jamais parfaitement immobile et les traits du visage, notamment dans la région des yeux et de la bouche, se déforment en permanence. Elle utilise également le fait que tout terminal conforme à la recommandation H 261 contient déjà des moyens de prédiction inter-image pour les blocs constitutifs et souvent des moyens de détermination du vecteur vitesse pour chaque bloc.

L'invention propose en conséquence un terminal conforme à la revendication 1.

Les moyens supplémentaires à prévoir pour estimer l'activité temporelle individuelle de chaque bloc et rechercher les blocs d'activité maximale peuvent être simples, car la plupart des composants nécessaires sont déjà prévus dans le terminal dans un but de prédiction intra ou inter-image.

L'indication fournie au locuteur peut prendre des formes très diverses. Cette indication peut se limiter à l'incrustation de flèches dont la direction (et éventuellement la longueur) indique le sens (et éventuellement l'importance) du déplacement que doit effectuer le locuteur pour se recentrer, lorsque son décentrage par rapport à la caméra dépasse un seuil déterminé.

Une indication plus directement compréhensible consiste en un effacement ou un décalage de l'image du correspondant sur l'écran du moniteur, dans une direction et d'une amplitude correspondant à celles du défaut de centrage du locuteur.

L'invention sera mieux comprise à la lecture de la description qui suit d'un mode particulier de réalisation de l'invention, donné à titre d'exemple non limitatif. La description se réfère aux dessins qui l'accompagnent, dans lesquels :

– la figure 1 est un schéma de principe montrant les composants principaux d'un codeur-décodeur de terminal viosiophonique conforme à la recommandation H 261, complété pour mettre en oeuvre l'invention ;

– la figure 2 est un schéma destiné à faire apparaître le mode de lecture en mémoire dynamique dans un terminal conforme à un mode particulier de réalisation de l'invention ;

– la figure 3 montre l'aspect de l'image fournie par le moniteur en cas d'utilisation d'une mémoire dynamique du genre schématisé en figure 2.

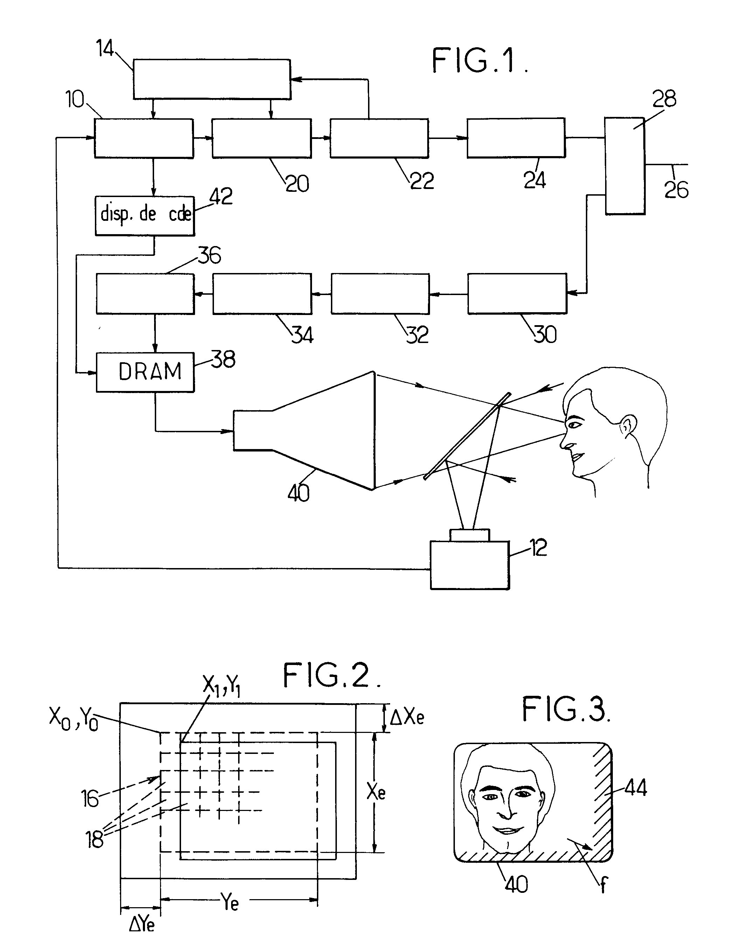

Le codeur-décodeur montré en figure 1 ne sera pas décrit en détail, car sa constitution générale peut être identique à celle de visiophones déjà commercialisés et conformes à la recommandation H 261. La partie codeur comprend un codeur de source 10 recevant un signal vidéo fourni par une caméra 12. Ce codeur fonctionne suivant un mode sélectionnable à l'aide d'un circuit de commande 14. Dans tous les cas, il effectue une compression du signal vidéo qui implique le fractionnement de l'image, représentée schématiquement en 16 sur la figure 2, en bloc 18 (par exemple de 8x8 pixels), une opération de prédiction inter-image sur chaque bloc, éventuellement une détermination de vecteur vitesse sur des macro-blocs constitués par exemple chacun de quatre blocs (par une technique qui peut être une quelconque de celles couramment utilisées, notamment en télévision haute définition), et une transformée en cosinus discrète.

Tous les paramètres représentatifs de l'image fournis par le codeur de source 10 et les indications identifiant le mode de fonctionnement, provenant du circuit de commande 14, sont appliqués à un multiplexeur vidéo 20 qui alimente, par l'intermédiaire d'une mémoire tampon 22, un codeur de transmission 24. Le train binaire provenant du codeur de transmission 24 est appliqué à une ligne téléphonique 26 par l'intermédiaire d'un circuit séparateur 28.

Les trains binaires provenant d'un terminal éloigné et appliqués au codeur-décodeur vidéo sont dirigés vers la partie décodeur. Ils traversent d'abord un décodeur de transmission 30 et une mémoire tampon de réception 32. Un démultiplexeur 34 restitue au décodeur de source 36 les informations nécessaires pour effectuer les opérations duales de celles du codeur 10. Les caractéristiques de chaque pixel (luminance et éventuellement chrominance) sont mémorisées dans une mémoire vive 38 dont la lecture s'effectue à une cadence fixée par une horloge non représentée. Le moniteur 40 reçoit ces signaux par l'intermédiaire des circuits habituels qui assurent notamment le dématriçage en cas de transmission en couleur.

Pour permettre la mise en oeuvre de l'invention, la mémoire 38 est constituée par une mémoire dynamique de capacité suffisante pour permettre de stocker non seulement les caractéristiques des $Y_e$ pixels de chacune des $X_e$ lignes reconstitués sous forme numérique par le codeur-décodeur, mais aussi les caractéristiques, fixées à priori, de pixels supplémentaires, correspondants à $2 \Delta Y_e$ points de $2\Delta X_e$ lignes. On mémorise ainsi une zone virtuelle autour de la zone reconstituée.

Le codeur-décodeur comporte de plus un dispositif de commande 42 qui provoque la lecture de la mémoire dynamique 38 non pas à partir d'une position $X_0$, $Y_0$ liée à l'image reconstituée par le décodeur, mais à partir d'une position $X_1$, $Y_1$. Le décalage entre les points $X_0$, $Y_0$ et $X_1$, $Y_1$ est sélectionné par le dispositif de commande 42 en fonction du sens et de l'amplitude du décalage entre les blocs de l'image ayant une forte activité temporelle (c'est-à-dire qui se modifient, d'une image à la suivante, d'une quantité supérieure à un seuil) et le centre du champ de la caméra. Cette détermination peut s'effectuer par des moyens connus. Par exemple l'activité temporelle de chaque bloc peut être représentée par la somme des carrés des écarts de luminance entre points correspondants de deux images successives. Le barycentre des blocs dont l'activité ainsi déterminée est supérieure à un seuil est calculé. La position de ce barycentre est comparé au centre du champ de la caméra, ou à un autre point déterminé dans le champ de la caméra.

Par exemple, en cas de décalage vers la gauche du visage du locuteur, le dispositif de commande 36 provoquera une lecture en mémoire dynamique 38 avec un décalage du genre montré en figure 2 et l'image de l'interlocuteur apparaîtra sur l'écran du moniteur 40 décalée vers la gauche, avec une bordure unie 44. Cela induira naturellement le locuteur à se déplacer par rapport à la caméra dans un sens qui provoque la disparition de la bordure unie.

Cette solution présente notamment l'avantage de donner une indication très claire, même lorsque le correspondant n'est lui-même pas exactement centré.

Dans une variante de réalisation, qui n'exige pas une taille de mémoire dynamique 38 supérieure à celle strictement nécessaire pour mémoriser $Y_e$ pixels de chacune des $X_e$ lignes, le dispositif de commande substitue simplement, avant lecture, une bande unie, par exemple noire, aux points correspondants de l'image provenant du décodeur. Cette opération peut s'effectuer de façon très simple, par écriture en certains points de la mémoire dynamique 38 après décodage et avant lecture pour affichage sur le moniteur 40.

Dans une autre variante encore de réalisation, beaucoup plus simple mais qui a l'inconvénient de donner une indication moins parlante à l'utilisateur, le dispositif de commande 42 incruste simplement, dans l'image, une flèche f̲ indiquant dans quel sens le locuteur doit déplacer son visage pour le recentrer par rapport à la caméra.

## Revendications

1. Terminal visiophonique comprenant un moniteur de télévision (40) destiné à fournir l'image du correspondant, une caméra de télévision orientée pour fournir un signal vidéo de représentation en gros plan du locuteur utilisant le terminal, et un codeur-décodeur de mise du signal vidéo sous forme d'un train binaire sortant et de transformation d'un train binaire entrant en un signal d'utilisation par le moniteur, la partie codeur ayant un codeur de source comprenant des moyens de prédiction temporelle inter-image et de transformation en cosinus discrète de chacun de blocs rectangulaires de pixels, de même taille, constituant l'image,
caractérisé en ce que le codeur-décodeur contient des moyens d'estimation de l'activité temporelle individuelle des blocs d'image, par comparaison entre blocs correspondants de deux images successives, et des moyens pour déterminer les blocs d'activité temporelle maximale et comparer leur position avec une position de référence prédéterminée et des moyens pour fournir, sur le moniteur, une indication du sens du déplacement éventuel requis du locuteur pour qu'il soit cadré par rapport à la caméra.

2. Terminal selon la revendication 1, caractérisé en ce que l'indication du sens du déplacement est constituée par la substitution d'une bande uniforme sur le moniteur (40) à une fraction de l'image, du côté vers lequel l'utilisateur doit déplacer son visage.

3. Terminal selon la revendication 1, caractérisé en ce que l'indication du sens de déplacement est constituée par une flèche incrustée dans l'image fournie par le moniteur.

4. Terminal selon la revendication 1 ou 2, caractérisé en ce que lesdits moyens fournissant une indication comprennent une mémoire dynamique (38) ayant une capacité supérieure au nombre de pixels constituant l'image restituée par un décodeur de source (36), appartenant à la partie décodeur, qui est prévu pour écrire les informations représentatives de l'image décodée dans une zone centrale de la mémoire (38) et un dispositif de commande (42) pour, en réponse à une information fournie par les moyens de comparaison de positions, provoquer la lecture en mémoire dynamique et l'affichage sur le moniteur de pixels représentés par une zone de la mémoire décalée de la zone d'écriture, dans un sens et d'une distance correspondant au sens et à l'amplitude du déplacement éventuel requis.

FIG.1.

FIG.2.

FIG.3.

Office européen
des brevets

**RAPPORT DE RECHERCHE EUROPEENNE**

Numero de la demande

EP    92 40 0442

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | NTZ-NACHRICHTENTECHNISCHE ZEITSCHRIFT vol. 42, no. 3, Mars 1989, BERLIN, PAGES 150,152-154 R.HEISS: 'BILDTELEFON UND VIDEOKONFERENZ-ENDGERÄTE' * le document en entier * --- | 1-4 | H04N7/14 |
| A | NTZ-NACHRICHTENTECHNISCHE ZEITSCHRIFT vol. 42, no. 3, Mars 1989, BERLIN,PAGES 136-138,140-142,144,145 D.BIERE ET AL.: 'VIDEO-CODEC UND ENDGERÄTE FÜR DAS ISDN-BILDTELEFON' * le document en entier * --- | 1-4 | |
| A | GB-A-2 123 646 (WESTERN ELECTRIC) * page 1, ligne 102 - page 2, ligne 8 * --- | 1-4 | |
| A | GB-A-2 157 912 (WESTERN ELECTRIC) * page 1, ligne 39 - ligne 124 * --- | 1-4 | |
| A | GB-A-2 110 046 (DFVLR) * abrégé * ----- | 1-4 | DOMAINES TECHNIQUES RECHERCHES (Int. Cl.5) H04N |

Le présent rapport a été établi pour toutes les revendications

| Lieu de la recherche | Date d'achèvement de la recherche | Examinateur |
|---|---|---|
| LA HAYE | 13 AVRIL 1992 | GREVE M.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P0402)